Europäisches Patentamt

European Patent Office

Office européen des brevets

(11) Publication number: **0 130 242**
A1

# EUROPEAN PATENT APPLICATION

(21) Application number: 83201211.6

(22) Date of filing: 22.08.83

(51) Int. Cl.⁴: **H 02 P 9/46**

(30) Priority: 29.06.83 IT 8412383

(43) Date of publication of application: 09.01.85
Bulletin 85/2

(84) Designated Contracting States: **AT BE CH DE FR GB IT LI LU NL SE**

(71) Applicant: **SOCIETA' TECNICO INDUSTRIALE FRIGORIFERA S.T.I.F. S.p.A., Via Nazionale 101 Belvedere di Tezze sul Brenta, I-Vicenza (IT)**

(72) Inventor: **Marchiorello, Giovanni, Via Nazionale 101 Belvedere Di Tezze Sul Brenta, I-36050 Vicenza (IT)**

(74) Representative: **Piovesana, Paolo, Corso del Popolo, 70, I-30172 Venezia-Mestre (IT)**

(54) Apparatus for using an induction motor as an electrical generator.

(57) The apparatus according to the invention for using an induction motor (2) as an electrical generator is characterized by comprising:

— a three-phase impressed voltage inverter (1) for connection to the terminals of the induction motor (2),

— a tank capacitor (3) connected to the inverter (1) on the direct current side, and

— a control circuit (4) of PID action controlled by the motor output parameter or parameters and acting on the operating frequency of the inverter (1) in order to adjust it to a value less than synchronous frequency and such as to create energy balance between the active power generated and that utilised.

This invention relates to an apparatus for using an induction motor as an electrical generator.

Reversible synchronous machines are well known. They are generally used as generators (alternators) for converting mechanical energy applied to their shaft into electrical energy, but can also operate as motors in that they supply mechanical energy to the rotor shaft when they are fed with electrical energy withdrawn from the mains and are suitably brought to synchronism.

However, when using electrical machines as motors, the induction machine is greatly preferred because of its constructional simplicity (it has no rotor excitation winding), because of its more elevated performance, its smaller dimensions for equal delivered power, its greater reliability, its self-starting capacity, the ability of the motor to support high temperature (it has no insulation) at high rotational speed, etc.

From a strictly theoretical viewpoint the induction machine is also reversible, i.e. an induction motor could be supplied with mechanical energy and provide electrical energy, thus operating as a generator. More specifically, in order to operate an induction machine as a generator, it must be rotated and excited with a suitable voltage at a frequency less than synchronous frequency. However, in practice the induction generator has never been used because:

- it would in any case require the presence of mains electricity as it is incapable of self-excitation, and
- even accepting this limitation, it would impose a drive speed related to the mains frequency.

The object of the invention is to use an induction motor also as a generator by overcoming the aforesaid limitations and drawbacks.

This object is attained according to the invention by an apparatus characterised by comprising:

- a three-phase impressed voltage inverter for connection to the induction motor terminals,
- a tank capacitor connected to the inverter on the direct current side, and
- a control circuit of PID action controlled by the motor output parameter or parameters and acting on the inverter operating frequency in order to adjust it to a value less than synchronous frequency and such as to create energy balance between the active power generated and that utilised.

A preferred embodiment of the present invention is described hereinafter with reference to the accompanying drawings in which:

Figure 1 is a diagrammatic view of the apparatus according to the invention,

- 2 -

Figure 2 shows a particular application thereof, and

Figure 3 shows a further application thereof.

As can be seen from the figures, the apparatus according to the invention comprises essentially a three-phase impressed voltage inverter 1 for connection to the terminals of an induction motor 2, a tank capacitor 3 for connection to the inverter 1 on the direct current side, and a circuit 4 for controlling the operating frequency of the inverter 1.

The inverter 1 is of conventional type and is constituted by an assembly of static switches 5, of which the active element is constituted by MOS-FETs, bipolar transistors or GTOs according to the powers and frequencies concerned, and with a diode 6 in antiparallel, this being necessary in order to enable the system to operate by natural phase difference (cos $\varphi$) between the voltage and current at the load 7.

The static switches 5 of the inverter 1 are controlled for example by a circuit which generates a signal by beating between two symmetrical rectangular waves obtained by dividing the frequency of one and the same oscillator by N and N+1. The output signal of the circuit is a periodic signal in which the pulse distribution has a basic period equal to N (N+1), and of which the distortion is smaller the greater is the number N.

- 3 -

The power necessary for operating the static switches 5 is provided by a mininverter (not shown on the drawings) which has a number of secondaries equal to the number of static switches to be operated. The control circuit 4, of PID (proportional, integral, derivative) action is constituted in the illustrated example by a regulator which receives as input the reference voltage R which, compared with the voltage measured at the D.C. side of the inverter, provides as output a voltage signal which controls the inverter operating frequency, thus making the system stable.

The apparatus according to the invention operates as follows:

it will be assumed that the motor 2 is rotated by a primary engine, for example an internal combustion engine. Initially, when under no-load conditions, there is no voltage across the terminals of the motor 2. However, the application even of a small voltage to the D.C. side of the inverter (provided for example by a battery 10 by way of a blocking diode 11) and the presence of the regulator 4 which adjusts the operating frequency of the inverter 1 to below synchronous frequency, makes the motor 2 operate as a generator, and the active power thus generated is fed back to the tank capacitor 3, which increases its voltage and thus self-excites the machine 2. As the voltage generated by

- 4 -

the machine rises, the regulator 4 causes the inverter operating frequency to increase until steady running conditions are attained, in that the machine 2 operates as a generator self-excited under no-load.

On connecting the load 7, a transient is produced which alters the system equilibrium conditions (the output voltage of the generator 2 falls), and this alteration is sensed by the regulator 4 which causes the inverter 1 to undergo negative slippage until the new equilibrium conditions between the generator 2 and load 7 are restored. In the transient stage, correct operation is conditioned by the tank capacitor 3, which re-balances the energy balance without excessively stressing the system.

The apparatus heretofore described can be advantageously utilised for converting an induction motor into a generator, for use instead of conventional alternators, with all the advantages that this substitution gives.

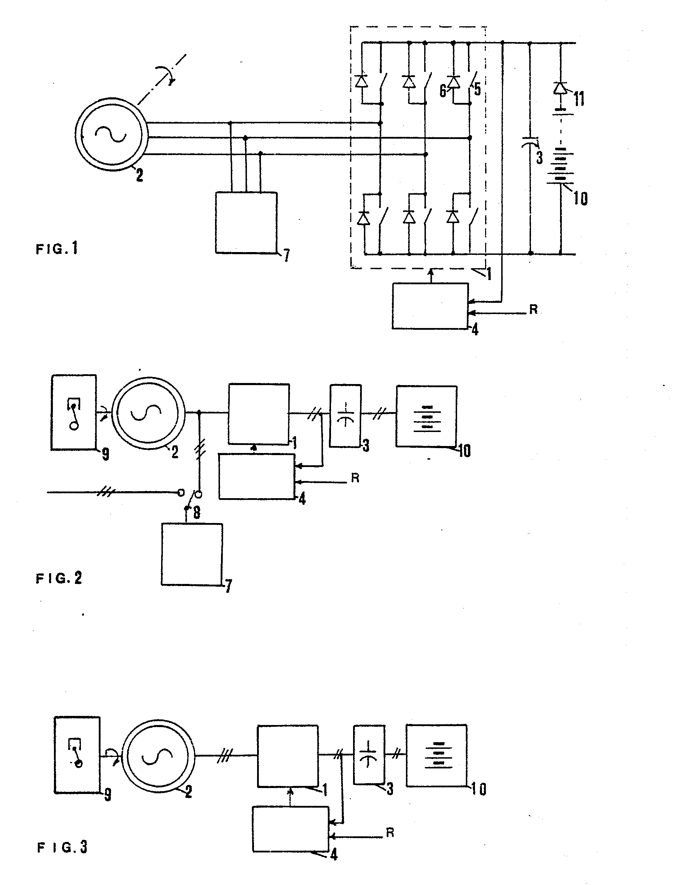

The embodiment shown in Figure 2 illustrates an advantageous application of the apparatus according to the invention as an emergency alternating current generator. Normally the load 7 is fed from the mains. If this should fail, the primary engine 9 is started (by way of the motor-generator) under the control of the inverter. During this stage, the instantaneous energy requirement for starting is supplied by a buffer battery 10, whereas when under steady running conditions, because of the fact that the induction generator 2 and load 7 also require a reactive power for operation, this is totally supplied by the inverter 1, which operates at $\cos\varphi = 0$.

A further applicational example is the electrical generating set. At present, such a set comprises a primary engine (internal combustion), a direct current electric motor for starting the primary engine, an alternator, a rectifier for the alternating current generated by the alternator, and a battery. An electrical generating set of the same configuration but using the apparatus according to the invention is shown in Figure 3, and comprises the same primary engine 9, an induction motor 2, an inverter, a tank capacitor 3, the control circuit 4 for the inverter 1, and the battery 10. When the voltage of the battery 10 falls below a predetermined threshold value, it feeds the motor 2 by way of the inverter 1, the motor then starting the primary engine 9. When this has started, it rotates the induction motor 2 which, as stated heretofore, is made to operate as a generator which charges the battery 10 by way of the diode bridge which constitutes an integral part of the inverter 1.

A comparison between the two configurations immediately shows the merits and advantages of the second.

- 6 -

In this case, a further advantage is its constructional simplicity. In this respect, the induction machine rotor can be directly keyed on to the internal combustion engine shaft, thus also acting as a flywheel, without the need to mount flanges and bearings on the electrical machine stator.

CLAIM

1.      Apparatus for using an induction motor (2) as an electrical generator characterised by comprising:

- a three-phase impressed voltage inverter (1) for connection to the terminals of the induction motor (2),

- a tank capacitor (3) connected to the inverter (1) on the direct current side, and

- a control circuit (4) of PID action controlled by the motor output parameter or parameters and acting on the operating frequency of the inverter (1) in order to adjust it to a value less than synchronous frequency and such as to create energy balance between the active power generated and that utilised.

- 1 -

FIG.1

FIG.2

FIG.3

U130242

## EUROPEAN SEARCH REPORT

**European Patent Office**

Application number

EP 83 20 1211

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 829 758 (G.H.STUDTMANN) *The whole document* --- | 1 | H 02 P 9/46 |
| A | DE-A-1 932 272 (SIEMENS) *Page 2, line 24 - page 3, line 15; page 5, lines 1-31; figure 1* --- | 1 | |
| A | DE-A-2 722 697 (SIEMENS) *Page 3, lines 11-25; figure* --- | 1 | |
| A | IEEE TRANSACTIONS ON INDUSTRY APPLICATIONS, vol. IA-13, no. 5, September/October 1977, pages 422-428, New York (USA); M.B.BRENNEN et al.: "Static exciters for induction generators". --- | | |
| A | CH-A- 239 034 (BROWN, BOVERI & CIE) ----- | | **TECHNICAL FIELDS SEARCHED (Int. Cl. ³)** H 02 P 9 H 02 K 17 H 02 J 3 H 02 J 9 |

The present search report has been drawn up for all claims

| Place of search THE HAGUE | Date of completion of the search 05-04-1984 | Examiner POINT A.G.F. |
|---|---|---|

EPO Form 1503. 03.82

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document